# EUROPEAN PATENT APPLICATION

(11) **EP 1 093 251 A2**
(43) Date of publication of application: **18.04.2001**
(21) Application number: 00102124.5
(22) Date of filing: 04.02.2000
(51) Int. Cl.: H04L 12/24, H04L 12/56

(54) **Method for the exchange of data between telecommunications networks**

(30) Priority: 15.09.1999 IT MI991922
(71) Applicant: Comm2000 S.p.A., 20145 Milano (IT)
(72) Inventor: Fiorentino, Marco, 20145 Milano (IT); Galli, Andrea, 20148 Milano (IT)
(74) Representative: Modiano, Guido, Dr.-Ing.

(57) **Abstract**

A method for the exchange of data between two telecommunications networks (A,B), comprising the steps of:
storing a set of N addresses of a destination telecommunications network (A);
when an originating telecommunications network (B) sends a data item or a message intended for a user of the destination network (A), assigning an address of the set of N addresses to the data item or message;
storing the address of the user of the originating network (B) who is sending the data item or message intended for the user of the destination network (A); and
sending the data item or message to the user of the destination network (A).

## Description

The present invention relates to a method for the exchange of data between telecommunications networks.

It is known that the development of modern communication technologies has made it possible to exchange communications very rapidly and between different telecommunications networks at a cost which is definitely attractive for users.

However, there are drawbacks in the exchange of messages between different communications networks, due to the need to have a one-to-one correspondence between each user of the respective networks.

This one-to-one correspondence allows a user of one network who receives a message from a user of another network to reply to the received message, thus knowing the reply address of the sender of the message.

However, this is not always possible, depending on the type of network and on the number of users of the network.

For example, when an e-mail user wishes to send messages to a user on a cellular telephone network, the message is received correctly by the owner of the cellular telephone, but the owner is not aware of the address of the sender and therefore cannot reply from his cellular telephone to the sender, since all he knows is the telephone number of the sender; he does not know, for example, the sender's e-mail address.

Because of this, it is substantially impossible to send replies to such messages; accordingly, this is a limitation to the exchange of communication for example between an e-mail network and a cellular telephone network.

The aim of the present invention is to provide a method for the exchange of data between telecommunications networks, in which it is possible to exchange messages between the two networks without having to assign to each user of one network a unique network address on the other network.

Within the scope of this aim, an object of the present invention is to provide a method for the exchange of data between telecommunications networks which increases the flexibility of the management of communication between the two networks.

Another object of the present invention is to provide a method for the exchange of data between telecommunications networks in which it is possible to determine a time within which a user who has received the message can reply to the sender of the message.

Another object of the present invention is to provide a method for the exchange of data between telecommunications networks which allows bidirectional exchange of data between the two networks autonomously for each network.

Another object of the present invention is to provide a method for the exchange of data between telecommunications networks which is highly reliable, relatively easy to implement and at competitive costs.

This aim, these objects and others which will become apparent hereinafter are achieved by a method for the exchange of data between two telecommunications networks, comprising the steps of:
storing a set of N addresses of a destination telecommunications network;
when an originating telecommunications network sends a data item or a message intended for a user of said destination network, assigning an address of said set of N addresses to said data item or message;
storing the address of the user of said originating network who is sending said data item or message intended for the user of said destination network; and
sending said data item or message to said user of the destination network.

Further characteristics and advantages of the present invention will become apparent from the following detailed description of preferred but not exclusive embodiments of the method according to the invention, illustrated only by way of non-limitative example in the accompanying drawings, wherein:
Figure 1 is a block diagram of a method for sending a message from one network to the other; and
Figure 2 is a block diagram of a method for replying to the message received from a network.

With reference to the above figures, the method according to the invention is as follows.

First of all, a few terms must be defined in order to better understand the method according to the invention.

The expression "originating network" designates, hereinafter, the network from which the data (messages) are originated and sent to another network. The first network, i.e., the originating network, is designated by the reference letter B, and the users of the network B know the address of the destination network (network A) that they wish to contact and know which system (gateway) on the network B they must contact in order to forward the data successfully.

The expression "destination network" instead designates the network A to which the data arriving from the network B (originating network) are addressed; in turn, the destination network can generate replies to said data, and such replies must therefore return to the user of the originating network B.

The method according to the invention further uses means for read/write access to a database; said means are termed "gateway" and are connected both to the network A and to the network B. Said means for read/write access to the database constitute the system which the users of the originating network B must contact in order to achieve delivery of the data on the network A.

Moreover, a set N of addresses of the destination network A is defined; said addresses are used by the read/write access means in order to present themselves to the destination network A; the users of the network A are unaware of the existence of the network B, or rather, of the addresses of the users of the network B.

Moreover, a time limit is defined after which a user of the destination network A can no longer reply to a message arriving from the originating network B.

The database is structured as follows. It contains two tables: the first table, termed "connections" hereinafter, contains the following fields:
-- originating address of the data from the originating network B
-- destination address of the data on the destination network A
-- address of the set of N addresses used to forward the data on the destination network A
-- date and time at which the data were sent from the originating network B to the destination network A.

The second table, termed "addresses", contains a single address field and is filled with all the addresses of the set of N addresses.

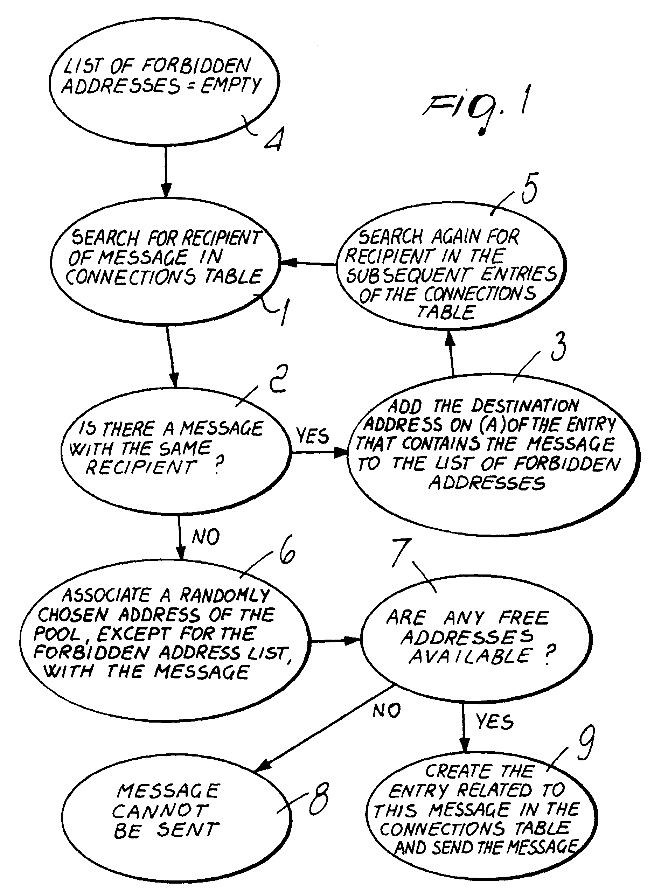

Figure 1 illustrates, in the form of a block diagram, the method for exchanging data (messages) from the network B on the means for read/write access to the database (gateway).

Initially, when a new data item or message enters from the originating network B on the means for read/write access to the database, said means scan the connections table, step 1, to determine whether data or messages with the same destination address as the new message are already present on the destination network A.

The step for searching for the presence of a message with the same recipient is designated as step 2 in Figure 1.

Therefore, if there is a message having the same recipient as the current message, the method moves on to step 3, where the destination address of the message on the network A of the entry of the data table that contains the message is added to a list of forbidden addresses, designated by the reference numeral 4, and the method searches again, step 5, for the recipient in the subsequent entries of the connections table.

If instead there are no messages having the same recipient, step 6, a randomly selected address of the set of N addresses is associated and a corresponding entry is created in the database, including its creation date and time.

In practice, if a message with the same recipient as the current message already exists, essentially a randomly selected address from the set of N addresses of the network A, excluding all those used in the entries of the table having the same destination address of the message on the network A as the message at issue, and therefore a corresponding entry is created in the database, including its creation date and time.

If no free addresses are available, step 7, the message cannot be forwarded, step 8; otherwise, as mentioned, step 9, the entry related to the current message is created in the connections table and the message is sent to the network A.

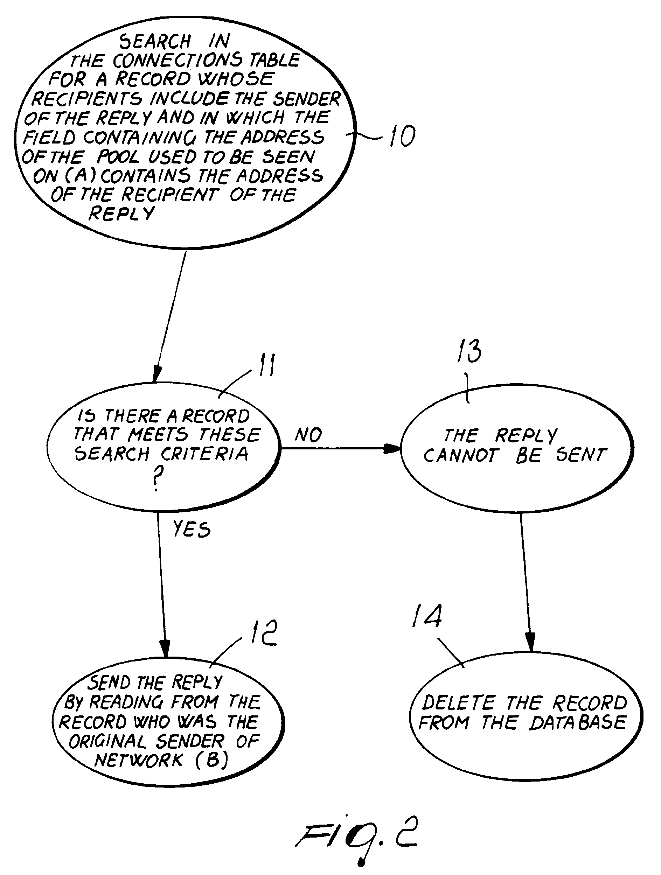

Figure 2 is a block diagram of the case in which a reply to the message sent by a user of network B to network A arrives from network A on the means for read/write access to the database.

In this case, step 10, the connections table is scanned in search of a message whose destination address for the message on the network A is the address that is originating the reply to the current message, and whose address of the set N of addresses to which the reply was sent has the corresponding field "address of the set of N addresses used to forward the message on the network A".

The method then checks whether there is a record of the table which meets the search criteria of step 10. This is performed in step 11.

If the result of the search is positive, i.e., if a record is found which meets the search criteria of step 10, the reply is sent, step 12, by reading from the record of the table who was the original sender of the network B who sent the message to which the user of the network A now wishes to reply.

Otherwise, step 13, if a record that meets the search criteria of step 10 is not found, it is not possible to send the reply to the message sent from the network B and therefore the entry of the database at issue is deleted, step 14.

In this manner, the user to which the reply is to be sent is always determined uniquely, since owing to the method by which the records of the table are created it is not possible to have a single address of the set of N addresses associated more than once with a specific recipient; accordingly, the combination of sender and recipient of the reply to the message becomes a unique key for searching the database.

Substantially, the users and/or terminals of the network A can reply uniquely to messages that arrive from the originating network B without having to assign to each user of the network B a unique network address of the network A. It is of course assumed that the users of the network B know which system to contact in order to send messages to the network A. Message routing is provided by using a limited number of addresses of the network A (set of N addresses) with which the network B is seen on the network A, and by maintaining the database that temporarily links said addresses of the network A to the users of the network B. The database is updated automatically on the basis of the exchange of messages between the network A and the network B.

In order to prevent depletion of the addresses of the set of N addresses available for being seen, from the network B, by a single recipient on the network A, a cycle for periodically purging the database is provided so as to remove the entries of the table that relate to messages that are older than the maximum time allowed to a user of the network A to reply to a message sent to him by a user of the network B. This is provided by performing a comparison between the field that indicates the date and time at which the message was sent by the network B and the maximum time available to the user of the network A for replying to said message.

The method according to the invention allows to choose at will the number of addresses of the set of N addresses (and therefore the value of N and the addresses of the set of N addresses, in addition to the maximum time available to a user of the network A for replying to a message sent to him by a user of the network B).

An example of practical application of the method according to the invention can be seen in the provision of a connection between Internet e-mail and the short messages used on the GSM cellular network.

In this case, by virtue of the method according to the invention it is possible to provide the gateway, i.e., the means for read/write access to the database, by means of a personal computer to which cellular telephones capable of sending short messages are connected. The numbers of the cellular telephones used constitute the set of N addresses.

Every Internet e-mail user is a user of the network B, and every GSM cellular telephone of the cellular network is a user of the network A.

When an e-mail user sends a message to a cellular telephone, the personal computer (gateway) presents it to the destination cellular telephone by using one of the cellular telephones of the set of cellular telephones that constitute the set of N addresses, and if the cellular telephone replies, the personal computer can, by means of the above-described mechanism, send the reply to the sender of the original e-mail message.

In practice it has been observed that the method according to the invention fully achieves the intended aim and objects, since it allows to avoid the need, for the exchange of data between two different communications networks, to assign a unique address of the second network to each user of a first network.

This allows the user of the network who receives, for example, an e-mail message to reply to said message even if he does not know the e-mail address of the sender but only knows his telephone number.

The method thus conceived is susceptible of numerous modifications and variations, all of which are within the scope of the inventive concept.

Thus, for example, in order to render the data exchange bidirectional, with each one of the two networks completely independent of the other, i.e., so that a user of the network B can send and receive messages and a user of the network A can do the same, even not directly in reply to a message sent from the network B, it is possible to provide two means for enabling read/write access to the database and two databases, each enabling means or gateway and each database being assigned to a respective network.

It is also possible to use one entry of the database (connections table) for a plurality of message exchanges; i.e., instead of deleting an entry of the database when a reply arrives, it is possible to update the field that contains the current date and time, leaving the task of purging the database exclusively to the purging step 14. In this manner, if two users on the two networks B and A are frequently exchanging messages, they can have the advantage of always seeing the same address for the replies.

All the details may further be replaced with other technically equivalent elements.

The disclosures in Italian Patent Application No. MI99A001922 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for the exchange of data between two telecommunications networks, characterized in that it comprises the steps of:
storing a set of N addresses of a destination telecommunications network;
when an originating telecommunications network sends a data item or a message intended for a user of said destination network, assigning an address of said set of N addresses to said data item or message;
storing the address of the user of said originating network who is sending said data item or message intended for the user of said destination network; and
sending said data item or message to said user of the destination network.

2. The method according to claim 1, characterized in that said set of N addresses comprises addresses chosen freely among the addresses of said destination network.

3. The method according to claim 1, characterized in that the step of storing the set of N addresses of said destination network comprises the steps of:
defining at least one database which comprises a first table which stores the originating address of said data item or message from the originating network, the destination address of said data item or message on the destination network, the address of said set of N addresses of the destination network, the date and time when said data item or message was sent from said destination network to said originating network; and a second table, which stores the addresses of said set of N addresses.

4. The method according to claim 3, characterized in that said step of assigning, when an originating telecommunications network sends a data item or message meant for a user of said destination network, an address of said set of N addresses to said data item or message, comprises the additional steps of:
scanning said first table to check whether data items or messages whose destination address on said destination network is equal to the address of a message currently to be sent to said destination network are already stored;
if there are none, choosing a random address among said set of N addresses, assigning it to said data item or message, and creating an entry of said first table bearing the indication of its creation date and time;
if there are, choosing from said set of N addresses any address, so long as it is different from the address or addresses assigned to data items or messages having the same destination address as said current data item or message to be transmitted, and creating an entry of said first table bearing the indication of its creation date and time.

5. The method according to claim 4, characterized in that it comprises the step of creating a list of addresses which cannot be used for assignment to said data item or message to be transmitted to said destination network.

6. The method according to claim 5, characterized in that it comprises, following the reception of a data item or message by said destination network and the intention to reply to said message, the steps of:
scanning said first table in search of a data item or message whose destination address on the destination network is the address of the received data item or message and whose address of the set of N addresses is the address of the recipient of the reply to said received data item or message.

7. The method according to claim 6, characterized in that if said scan yields a positive result said reply is sent to the address of the user who sent said data item or message to said destination network.

8. The method according to claim 7, characterized in that it further comprises the step of deleting, following the sending of said reply, the entry of said first table that contains the address of the user who sent said data item or message in reply to which said reply is sent.

9. The method according to claim 7, characterized in that it comprises the step of updating said date and time of said first table when a reply is received.

10. The method according to claim 3, characterized in that said database is created for each one of said originating and destination networks.

11. The method according to claim 3, characterized in that said database is accessed by way of read/write access enabling means which provide a connection between said originating network and said destination network.

12. The method according to claim 7, characterized in that a maximum time limit is defined for reply by a user of said destination network to said data item or message sent by the user of said originating network.

13. The method according to claim 12, characterized in that it further comprises the step of deleting from said database the addresses related to data items or messages whose creation date is earlier than said maximum time allowed for replying.

14. The method according to claim 7, characterized in that it comprises the step of updating said date and time of said first table when a reply is received.
